# EUROPEAN PATENT APPLICATION

(11) **EP 4 432 480 A1**
(43) Date of publication of application: **18.09.2024**
(21) Application number: 23161732.5
(22) Date of filing: 14.03.2023
(51) Int. Cl.: H01R 13/26, H01R 43/24, B29C 45/14, H01R 103/00

(54) **CONTACT CARRIER, METHOD OF PRODUCING A CONTACT CARRIER AND APPARATUS FOR PRODUCING A CONTACT CARRIER**

(71) Applicant: TE Connectivity Solutions GmbH, 8200 Schaffhausen (CH); TE Connectivity Belgium B.V., 8020 Oostkamp (BE)
(72) Inventor: Devos, Peter, 8020 Oostkamp (BE); Danneels, Rik, 8020 Oostkamp (BE); Baertsoen, Peter, 8020 Oostkamp (BE); Flittner, Frank, 64625 Bensheim (DE); Klingler, Dominik, 64625 Bensheim (DE)
(74) Representative: Grünecker Patent- und Rechtsanwälte PartG mbB

(57) **Abstract**

The invention relates to a contact carrier (100), comprising at least one contact element (30) and a moulded carrier body (20) fixing the at least one contact element (30) at a fixing section (35) thereof, wherein the contact element (30) comprises a contact section (33) for contacting a mating contact element along a contacting direction (C), the contact section (33) being elastically deflectable relative to the carrier body (20) against the contacting direction (C), and a stopping section (32) that rests in a pre-tensioned manner against a resting section (22) on the carrier body (20). Further disclosed are a corresponding method (301, 302, 302, 304) and a corresponding apparatus (400).

## Description

The invention relates to a contact carrier. Further, the invention relates to a method of producing a contact carrier. Moreover, the invention relates to an apparatus for producing a contact carrier.

Contact carriers usually comprise at least one contact element for making contact with a mating contact element along a contacting direction. It is often necessary to have enough contact force for a secure connection. Previous contact carriers are usually difficult to manufacture.

The object of the invention is thus to provide a contact carrier that is easy to manufacture and in which the contact element exerts a high enough contact force when contacting a mating contact element.

According to the invention, this is achieved by a contact carrier, comprising at least one contact element and a moulded carrier body fixing the at least one contact element at a fixing section thereof, wherein the contact element comprises a contact section for contacting a mating contact element along a contacting direction, the contact section being elastically deflectable relative to the carrier body against the contacting direction, and a stopping section that rests in a pre-tensioned manner against a resting section on the carrier body.

The corresponding method of producing a contact carrier comprising a contact element and a carrier body, comprises the step of moulding the carrier body, wherein a contact section of the contact element is elastically deflected relative to a fixing section of the contact element during the step of moulding the carrier body.

The apparatus for producing a contact carrier comprising a contact element and a carrier body comprises parts for forming a mould for injection moulding the carrier body, wherein the apparatus is adapted to elastically deflect a contact section of the contact element relative to a fixing section of the contact element.

With this solution, the production is simple. Further, due to the deflection of the contact section during the production and the resulting pre-tensioning in the finished contact carrier, the contact force is higher already at an initial contact with the mating contact element.

The solution according to the invention can further be improved by the following further developments and advantageous embodiments, which are independent of each other and can be combined arbitrarily, as desired.

It is particularly advantageous, if the carrier body is a single piece. In other words, the carrier body can be integral or monolithic. Manufacturing such a contact carrier can be particularly easy, as only a single moulding step can be necessary. Further, additional steps during manufacturing can be dispensed with, for example, a step in which two parts forming the carrier body are combined. Such a single-piece carrier body comprises at least a section at which the fixing section of the contact element is fixed and the resting section for the stopping section.

Preferably, the stopping section is deflectable with the contact section. This can result in a good mechanical transmission of forces.

The contact element can be a single piece. Similar to the carrier body, the assembly can be facilitated therewith.

In one embodiment, the contact element is a strip, preferably a metal strip or a strip of another conductive material. The production can then be simple.

Other possible shapes include a pin shape or shapes that have strip or pin-shaped sections.

A length of the contact element can be at least 5 times a width of the contact element and/or at least 10 times a thickness of the contact element. The length, the width and the thickness can be measured in directions that are perpendicular to each other.

In a preferred embodiment, the contact element is a stamped and/or bent metal part. The production can then be easy. For example, the contact element can be made from sheet metal by cutting and/or deforming.

The contact section can be located on a deformed part of the contact element, for example a bent or curved part. This can facilitate the contacting.

In one development, the contact section is bow shaped. This can result in a good distribution of the forces during contacting.

To allow a simple design and a good impedance, for example for high transmission rates in signal lines, the fixing section can be straight.

A sufficient effect can be achieved in many cases when a length of the stopping section is less than 20 %, preferably less than 10 %, especially less than 5% of the entire length of the contact element and/or less than 40 %, preferably less than 20 %, more preferably less than 10 %, especially less than 5% of a length of the fixing section.

Simple contacting is possible, when a contact point of the contact section is located at an outermost point of the contact element. Outermost here refers in particular to the contacting direction. To have a high contact force, the contact point can be located at the point of the highest curvature value.

It is to be understood that in the method or the apparatus, the elastic deflection of the contact section can be achieved by moving the contact section or parts that are movably connected to the contact section, for example a stopping section, a free end or a transition section. It is not necessary that the contact section is in direct touch with a deflecting part to result in an elastic deflection of the contact section. The deflection of the contact section can thus be direct or indirect with intermediate elements. Preferably, the part that is in touch with the external element to achieve the deflection of the contact section is integral with the contact section to keep the construction simple. The pre-tensioning force is preferably created by the contact element itself. The stopping section or the other part that is moved can be a part of the contact section or vice versa.

A deflection here should in particular refer to a deflection greater than 2 times, preferably more than 3, more preferably more than 5 times a thickness of the contact section. Values of 20, preferably 10 times the thickness can be regarded as upper limits. "Deflection" might in particular not refer to a pure compression, but rather to an elastic movement.

To achieve a tight fit, the contact element can be moulded into the carrier body at the fixing section. The contact element can be held by moulded parts of the carrier body and/or be surrounded by moulded material. Such a fixing section can be embedded into moulded material. The corresponding section or the carrier body could be designated as an embedding section.

To allow a well-defined positioning, the contact section can be located between the stopping section and the fixing section.

If the contact section is located between the fixing section and a free end and/or a distal end, the deflection can be adjusted easily. "Free" means that the end is not fixed and not embedded, but rather movable. In case a high deflection length is desired, the contact section should be located close to the free or distal end.

To produce tensioning force for biasing or pre-tensioning, the contact element can comprise a transition section between the contact section and the fixing section. The length of the transition section and the properties thereof can be adjusted to meet a desired force or force profile. For example, the transition section can be treated with heat or made thinner or narrower to adapt the force.

In one embodiment, the transition section extends at an angle to the fixing section. This can, for example, simplify the defined positioning of a contact point and/or minimize the necessary bending at the contact section.

According to an advantageous embodiment, the stopping section is pre-tensioned along the contacting direction. This can allow a deflection of the contact section.

To allow a defined movement, the stopping section can be located at a free end of the contact element.

The stopping section, in particular a front face thereof, can extend perpendicular to the contacting direction to allow a compact configuration and a defined positioning.

The fixing section preferably extends perpendicular to the contacting direction to allow a thin contact carrier.

At least a part of the contact section can be outside an envelope of the carrier body, when no external force, for example a contact force, acts on the contact element or the carrier body. Achieving contact can then be easy.

In a deflected state, the contact section can be located within the envelope. In such a state, only a mounting section of the contact element where the contact element is mounted or connected permanently to a further external element like a wire or cable, can be outside the envelope. The envelope can be defined by sections next to a receptacle for the contact sections. It can span across the receptacle. It can be cuboid or comprise other simple geometric shapes like prisms.

The contact section can, for example, protrude through an opening of a receptacle to facilitate contact. The receptacle can enable a movement of the contact section.

According to one preferred embodiment, the free end and/or the stopping section are permanently located within the envelope of the carrier body. This can reduce the risk of damages.

The stopping section and/or the free end can be located in a tunnel section of the carrier body. This can allowing a deflection of the stopping section along the contacting direction. The tunnel section can extend along the same direction as the contact element to achieve a good fit in a compact design.

The tunnel section can be a part of the receptacle and/or be connected to it, to make the production easy.

In order to reduce the damage due to relative movements of the contact element and the mating contact element, the contact element can be curved along two perpendicular directions at the contact point.

According to an advantageous embodiment, the contact carrier can comprise at least two contact elements. The at least two contact elements should be fixed by the same carrier body.

To keep the manufacturing process simple, the at least two contact elements can have an identical shape. They can be arranged parallel to each other and, for example, be only offset perpendicular to the contacting direction.

The contact carrier can be a part of a connector, a plug, a socket, a header or another structure adapted for making a connection, in particular an electrical connection. It can be used for signal transmission, especially for high frequency and/or high data rate transmission.

In an advantageous embodiment of the method, the contact element is embedded in the carrier body by overmoulding at a fixing section of the contact element. This results in a good fit between the carrier body and the contact element.

Advantageously, the method can comprise only a single moulding step for moulding the entire carrier body. Such a one-shot method or single injection step method is more economical than methods that use more than one moulding step, for example 2K-moulding.

Preferably, the carrier body is moulded in its final form in a single step. For example, further steps of removing and/or separating parts and/or combining parts can be avoided.

To achieve the pre-tensioning in the finished contact carrier, the resting section of the carrier body is preferably formed spaced against the contact direction from the force-free position of the stopping section of the contact element. In other words, the resting section is formed behind the undeflected, force-free or zero position of the stopping section.

In some embodiments, a part of the carrier body is formed at a location where the stopping section would be located in a force-free or undeflected state. In other embodiments, this location is not filled with material of the carrier body, for example if the weight should be reduced. The resting section can still be located spaced from a force-free position of the stopping face in such embodiments.

In an advantageous embodiment, the part of the apparatus that is used for elastically deflecting a part of the contact element is also used as a part of the mould. For example, this part can be used to shape the receptacle or the tunnel section in which the stopping section is later located.

The method can comprise further steps, for example a gripping and holding of the contact element at a part that is not to be covered with the moulding material, a fine adjustment step for an exact positioning of the contact element, a cooling step, a retraction step in which at least one part of the mould is retracted, and a removal step, in which the contact carrier is removed from the mould.

The deflection is preferably done during an injection moulding step. Further, the deflection should be maintained during cooling and solidification of the molten moulding material, at least until the material is strong enough to internally maintain the deflection.

The apparatus is preferably adapted to form a part of the contact carrier at a location where the stopping section of the contact element is when not deflected.

The apparatus can in particular comprise a deflection module or deflection part for deflecting the contact section relative to the fixing section. This deflection module or deflection part can be configured to serve as a part of the mould. The mould is to be understood as the part in which the contact carrier is formed during injection moulding and that defines the shape of the final product.

The deflection module or part is preferably movable relative to a holding module for holding a part of the contact element.

The invention will now be described in detail and in an exemplary manner using advantageous embodiments and with reference to the drawings. The described embodiments are only possible configurations in which, however, the individual features as described above can be provided independently of one another or can be omitted.

In the figures:
- Fig. 1: shows a schematic perspective view of a first embodiment of a contact carrier;
- Fig. 2: shows a schematic sectional view of the contact carrier of Fig. 1;
- Fig. 3: shows a schematic perspective view of the contact carrier from a different view point;
- Fig. 4: shows a schematic top view of the contact carrier of Fig. 1;
- Fig. 5: shows a schematic sectional side view of the contact carrier of Fig. 1 with the contact section in a deflected state;
- Fig. 6: shows a schematic perspective view of the contact elements of the contact carrier of Fig. 1;
- Fig. 7: shows a step of a method of producing a second embodiment of a contact carrier;
- Fig. 8: shows a further step of the method of producing the second embodiment of a contact carrier;
- Fig. 9: shows a further step of the method of producing the second embodiment of a contact carrier;
- Fig. 9A: shows a detail of the further step of the method of producing the second embodiment of a contact carrier of Fig. 9;
- Fig. 9B: shows a further detail of the further step of the method of producing the second embodiment of a contact carrier of Fig. 9;
- Fig. 10: shows a further step of the method of producing the second embodiment of a contact carrier;
- Fig. 11: shows details of the further step of the method of producing the second embodiment of a contact carrier of Fig. 10.

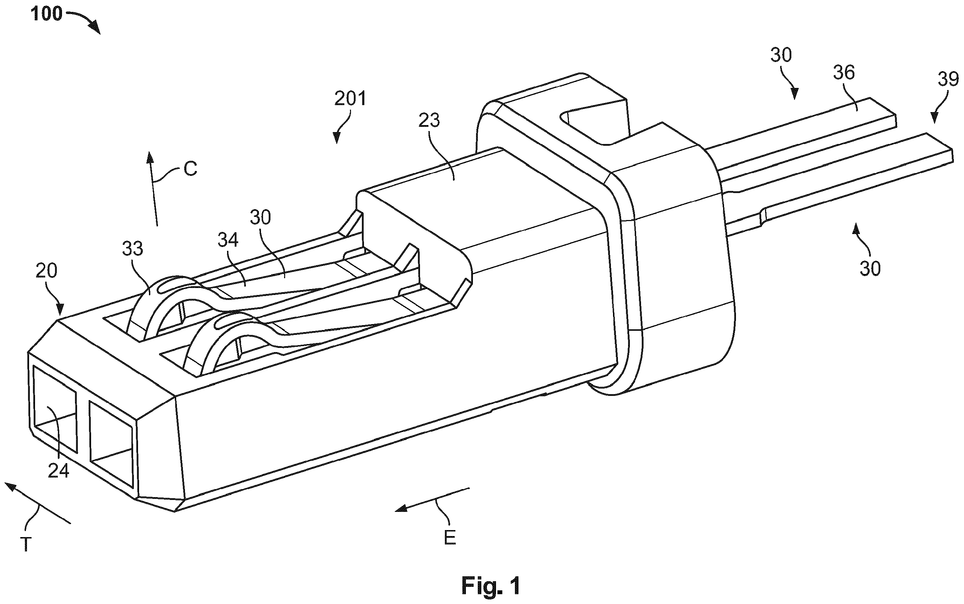

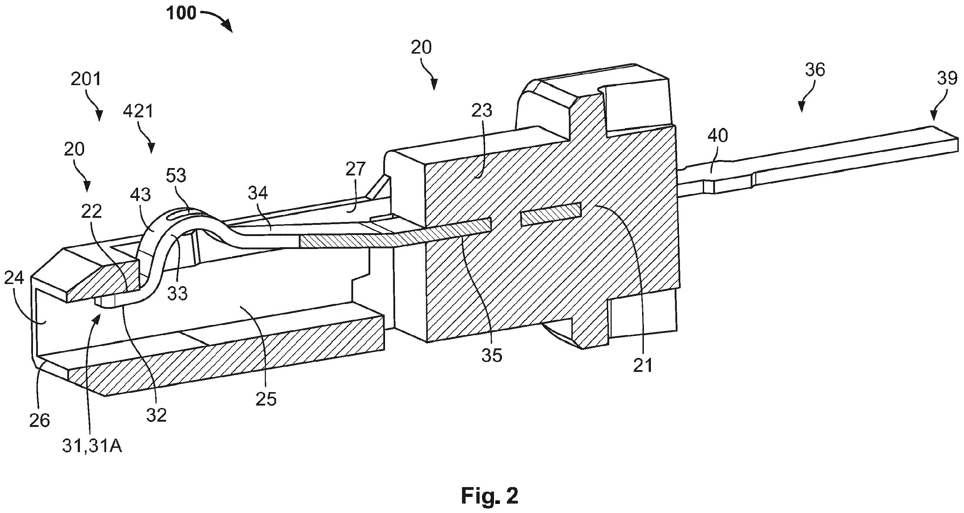

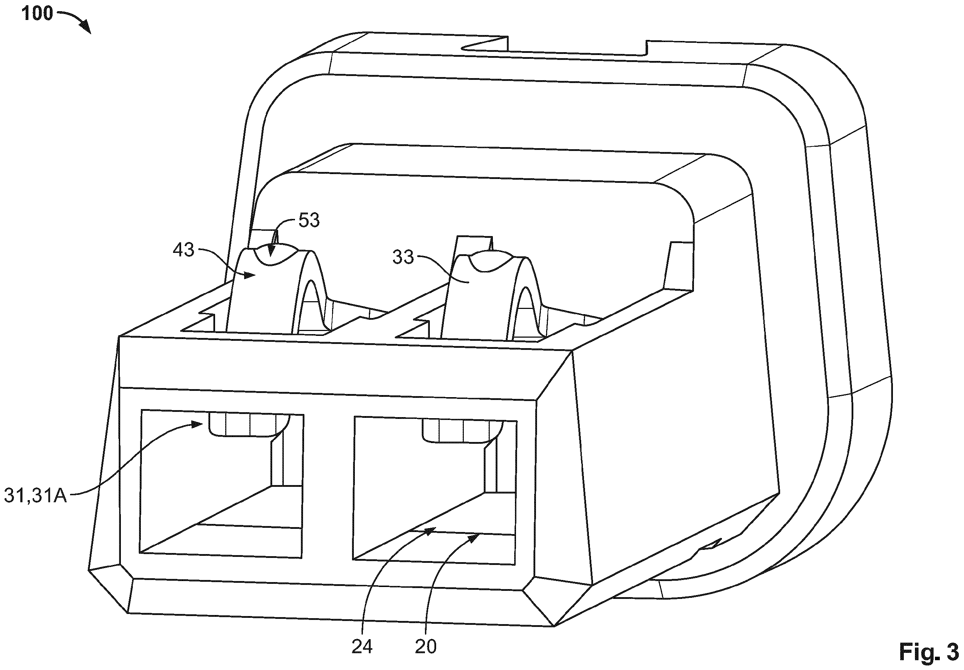

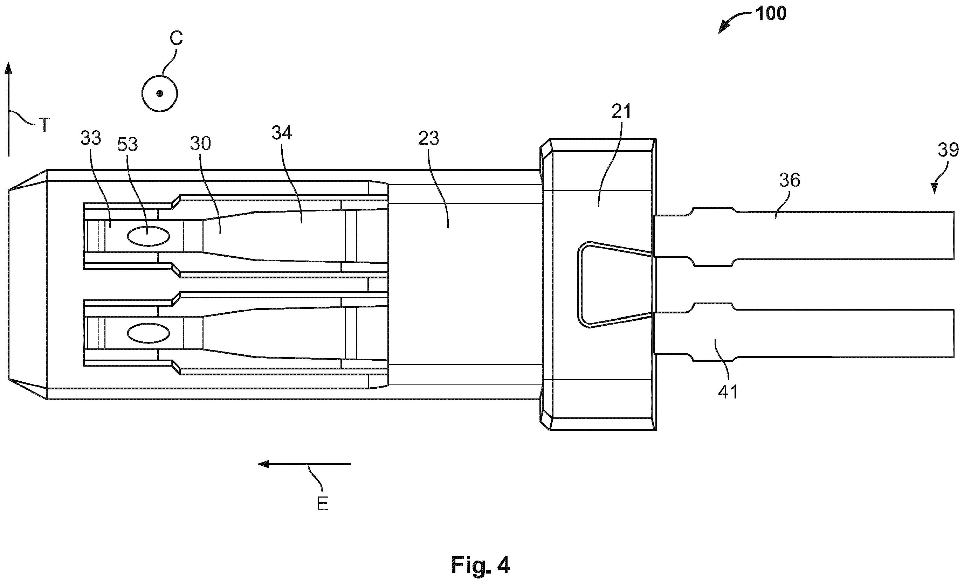

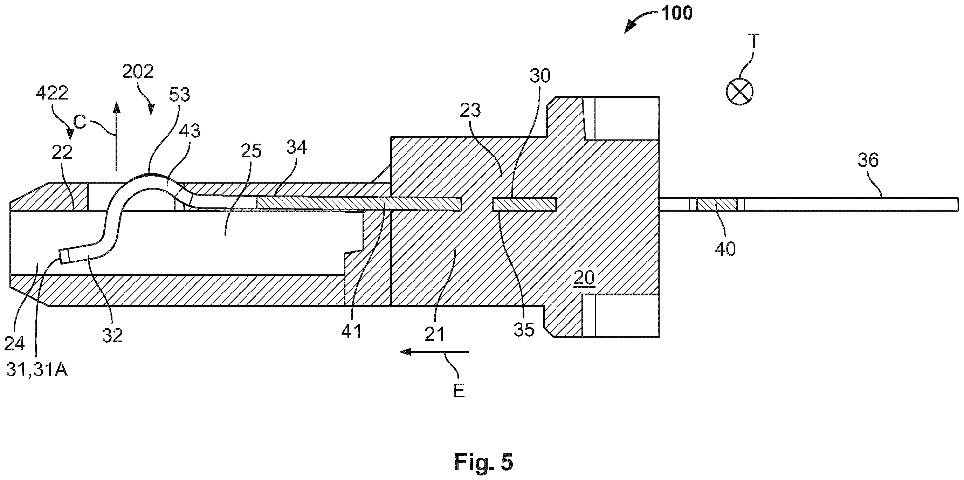

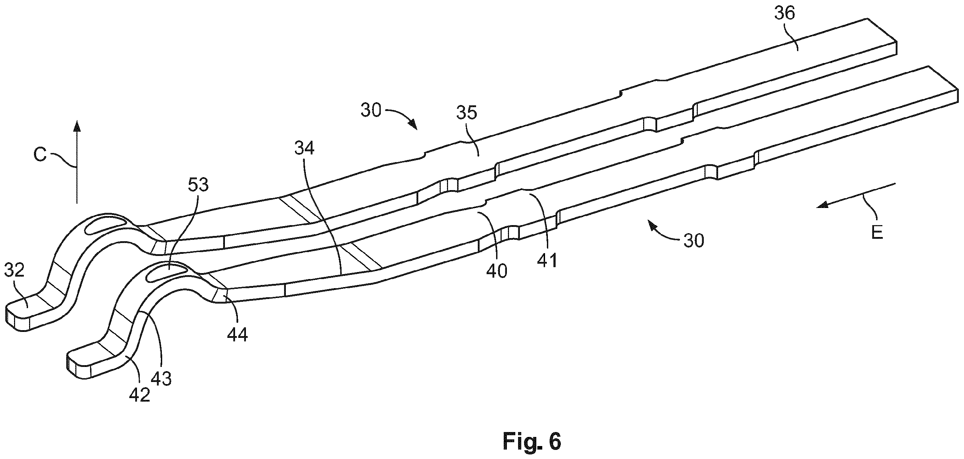

In Figs. 1 to 5, a first exemplary embodiment of contact carrier 100 is depicted. In Fig. 6, contact elements 30 of the first embodiment are depicted alone. While Figs. 1 to 4 show the contact carrier 100 in the delivery condition in which stopping sections 32 of the contact elements 30 abut corresponding resting sections 22 on a carrier body 20, Fig. 5 shows a deflected state 202 of the contact sections 33 that can for example correspond to a contacting state in which a mating contact element is contacted.

The contact carrier 100 comprises the carrier body 20, which is a single piece 21 of moulded material. Contact elements 30, in the exemplary embodiment two contact elements 30, are fixed to the carrier body 20. In particular, fixing section 35 of the contact elements 30 are embedded in the corresponding embedding section 23 of the carrier body 20. As can for example be seen in Fig. 6, the contact elements 30 have laterally protruding positive fit elements to prevent that the fixing section 35 move within the embedding section 23. These elements do not have to have a fixation effect, but can be necessary for the high frequency data design. Further, these elements could simply be remains from the connection of the contact elements to a bigger entity like a strip from which the contact elements have been separated for example by punching during preceding process steps.

The contact carrier 100 can be a plug part, a plug or a similar electrical connection structure. A first set of external elements can for example be attached at mounting sections 36 that are adjacent to proximal ends 39 of the contact elements 30. Such external elements can for example be cables, wires, or pin or strip shaped elements.

In order to make contact to a mating contact element (not depicted) along a contacting direction C, each contact element 30 comprises a contact section 33. In the depicted embodiment, a contact point 53 of the contact section 33 is located at an outermost point of a bow shaped section 43. At the contact point 53, the contact section 33 is curved in two directions to reduce the damage due to relative movements between the contact element 30 and the mating contact element. The mating contact elements can for example be moved towards the contact elements 30 counter to the contacting direction C or perpendicular thereto, for example along an extension direction E of the contact elements 30.

Each of the contact sections 33 can be deflected against or counter to the contact direction C by the mating contact element. During such a movement, the contact section 33 and a transition section 34 located between the contact section 33 and the fixing section 35 move further into a receptacle 25 formed in the carrier body 20. In a fully deflected state, the contact elements 30 can be within an envelope of the carrier body 20 that in particular extends in a planar manner over the receptacles 25.

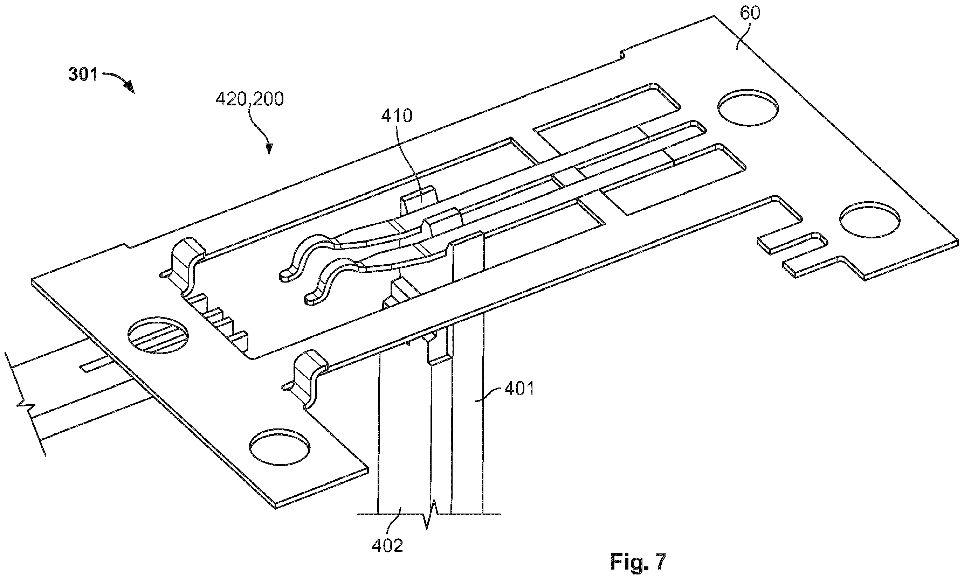

Next to the contact section 33, a stopping section 32 of the contact element 30 is arranged. As explained later with reference to Figs. 7 to 11, the contact carrier 100 has been produced such that the stopping section 32 abuts the resting section 22 of the carrier body 20 in a pre-tensioned manner. The stopping sections 32 push against the resting sections 22 along the contacting direction C. This has on the one hand the advantage that the position of the contact section 33 is well-defined. On the other hand, a contact force that the contact sections 33 exert on the mating contact elements is higher already at an initial stage of the contacting due to Hooke's law.

The stopping sections 32 are located at a distal end 31 that is configured as a free end 31A, i.e. an end that is not embedded in the carrier body 20 and can be deflected. During such a deflection, the contact section 33 moves simultaneously with the stopping section 32 and the transition section 34. The stopping sections 32 are located movably in tunnels sections 24 which connect front openings 26 with the receptacle 25.

In the exemplary embodiment of Figs. 1 to 6, the contact elements 30 are shaped as strips 40, in particular as cut and deformed metal parts 41 that have been created by stamping out of a metal sheet. In other embodiments, the contact elements can have other configurations, for example pin shapes that can for example be produced by cutting and deforming a wire shaped metal piece.

The length of the stopping sections 32 makes up only a small part of the length of the contact elements 30. The stopping sections 32 only need to be long enough to ensure that they rest on the resting sections 22 considering the usual manufacturing and assembling tolerances.

The length of the transition section 34 can be adjusted for example depending on the desired contact force. Further, the transition sections 34 can be treated, for example by heating to alter the material properties in the transition sections 34. Further, a width or a thickness of the transition section 34 can be altered to achieve a desired contact force or contact force profile. In the depicted embodiment, the transition sections 34 are inclined to the fixing sections 35 to achieve a desired spaced location of the contact point 53.

The contact sections 33 have been bent in a bow shaped member, where the bow shaped section 43 is located between a first curve 42 and a second curve 44 having lower radii of curvature than the bow shaped section 43.

Although an embodiment with two contact elements 30 is shown, the number of the contact elements 30 can be higher or lower. In particular, all of the contact elements 30 can be embedded in a single carrier body 20. The two contact elements 30 of the example contact carrier 100 are embodied basically identical and offset or spaced apart from each other along a transverse direction T that is perpendicular to the contacting direction C and perpendicular to the extension direction E of the contact elements 30.

The stopping sections 32 as well as the fixing sections 35 extend perpendicular to the contacting direction C, in particular their respective front faces. The transition sections 34, which produce the main part of the contact forces that press the stopping section 32 onto the resting sections 22, are slightly inclined to the extension direction E in this development. Due to the fact that the transition section 34 produces most of the pre-tensioning or biasing force, it could alternatively also be named pre-tensioning or biasing section.

With reference to Figs. 7 to 11, a method for producing a second embodiment of a contact carrier 100 and an apparatus 400 therefore are now described.

In a first step 301 (Fig. 7), the contact elements 30 that are still connected to the strip 60, which is used for handling during the manufacturing process. The strip 60 and the contact elements 30 can for example be parts of a metal sheet that have been modified by cutting out and bending parts. In the first step 301, the contact elements 30 are positioned by moving a coarse positioning part 401 towards the contact elements 30, which are received in channels 410 thereof.

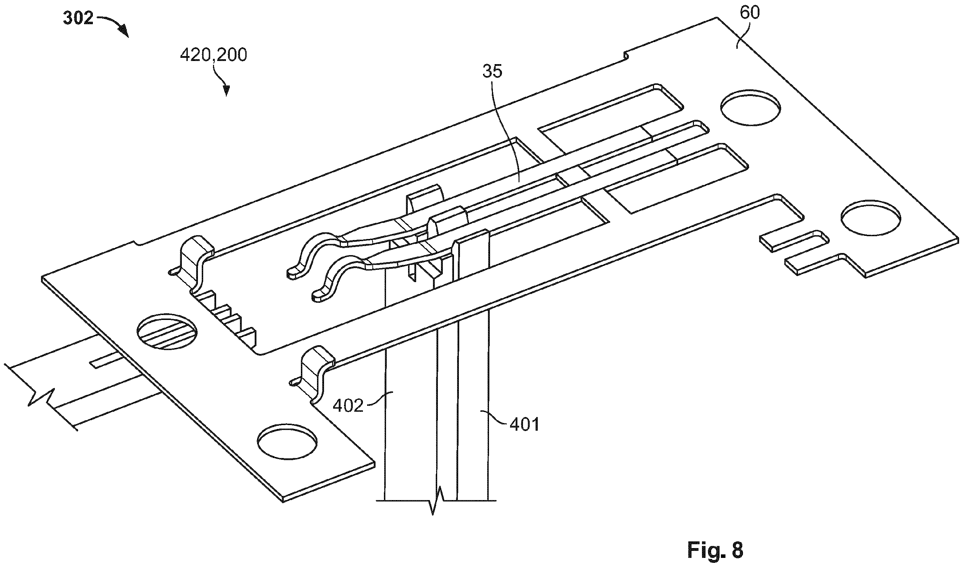

In the second step 302 shown in Fig. 8, a fine positioning of the contact elements 13 is achieved by moving a fine positioning part 402 against the contact elements. So far, no significant deflection out of the force free position 420 of the stopping section 32 and the undeflected state 200 of the contact section 33 has taken place.

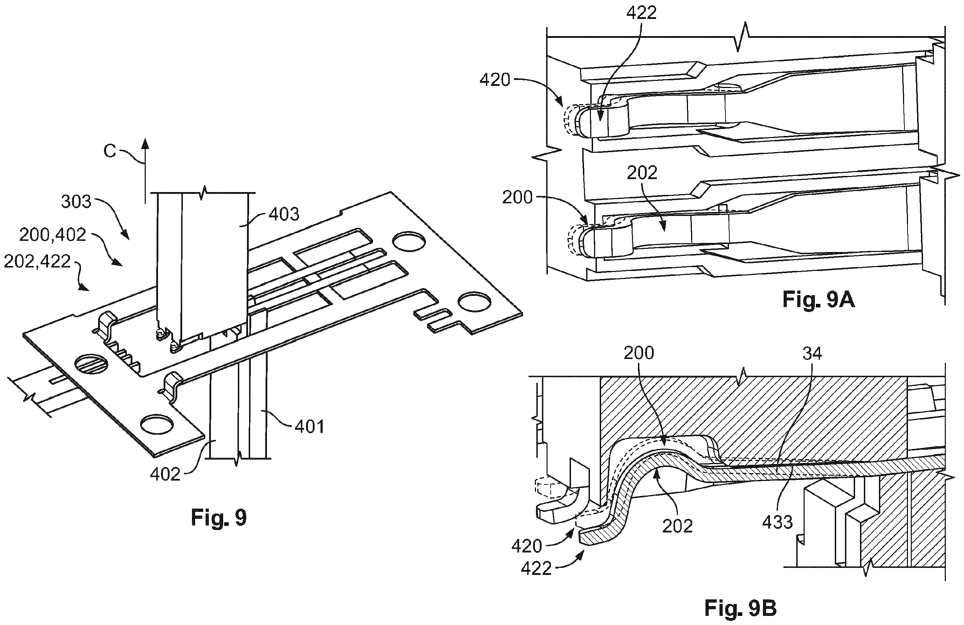

In the next, third step 303, depicted in Fig. 9 (and details thereof in Figs. 9A and 9B), a deflection part 403 is moved against the contact elements 30 counter to the contacting direction C. In Figs. 9, 9A, 9B, both, the force free position 420 of the stopping section 32 and the deflected position 422 of the stopping section 32 are shown, with the former shown in thinner lines. Similarly, both, the deflected state 200 of the contact section 33 and the deflected state 202 of the contact section 33 are shown in these figures. The actual movement of parts of the contact elements 30 is not achieved by contacting the contact sections 33 or the stopping sections 32 (which might however be possible in other embodiments), but rather by pushing against the transition sections 34 with a pushing face 433 located on the deflection part 403.

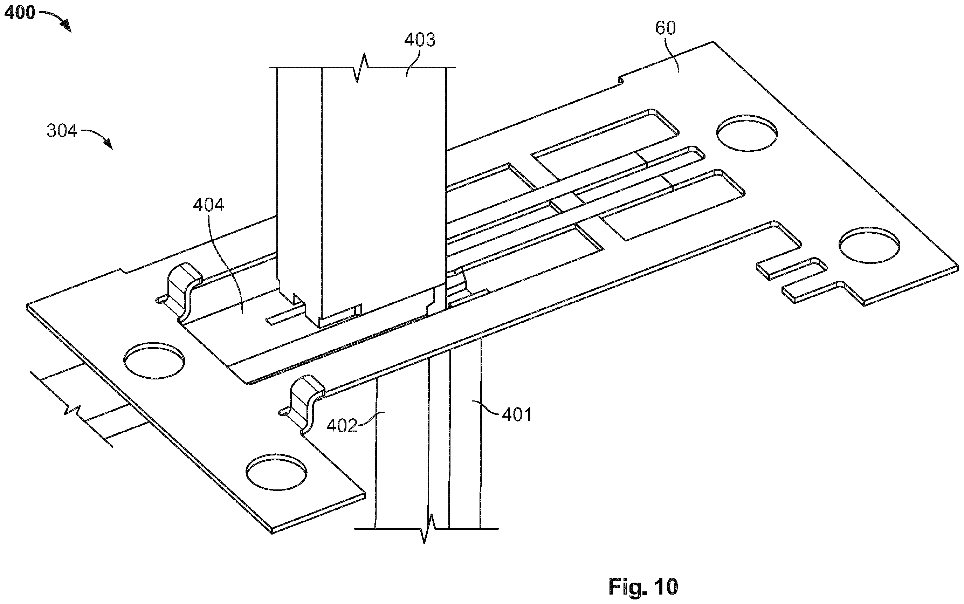

As illustrated in Fig. 10, the coarse positioning part 401 can now be retracted (step 304). A tunnel shaping part 404 and further non-depicted parts of the mould can be moved towards the contact elements 30 and liquid moulding material can be injected into the cavity formed by the parts. Advantageously, only a single injection step is necessary to form the carrier body 20.

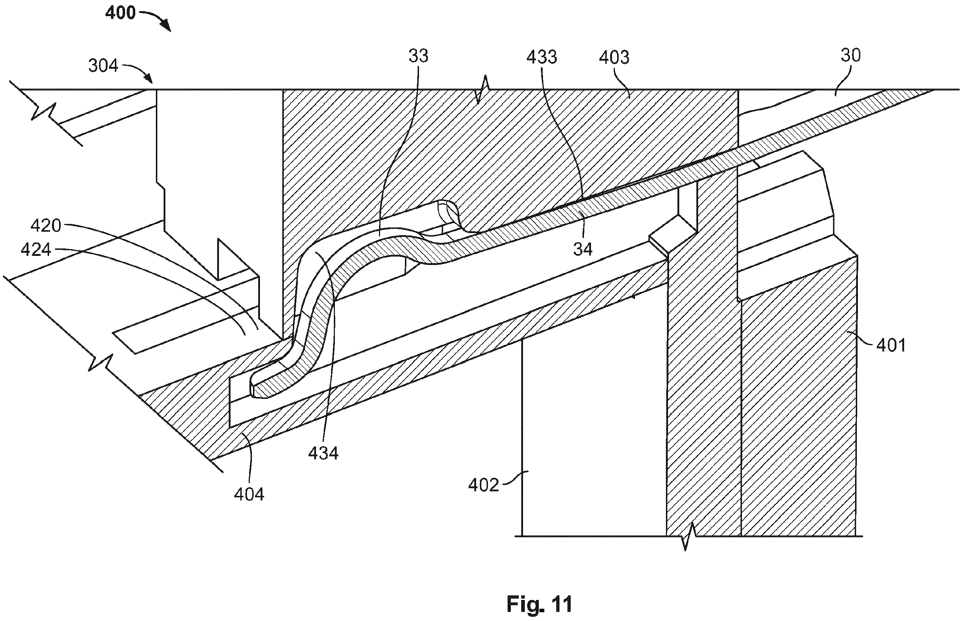

As can be seen in the detailed view of the step 304 shown in Fig. 11, a sealed hollow space 434 can be used to create the receptacle 25 and the tunnel section 24. Further, in this figure it can be seen that material can flow into the force free position 420 of the stopping section 32 as the stopping section 32 is deflected downward and the (now virtual) force free position 420 is located just above an upper face 424 of the tunnel shaping part 404.

In a non-depicted further step of the method, the parts 401, 402, 403, 404 of the apparatus 400 can be removed after sufficient cooling of the material. The stopping section 32 and the contact section 33 are then permanently biased or pre-tensioned within the contact carrier 100.

### REFERENCE SIGNS

- 20: carrier body
- 21: single piece
- 22: resting section
- 23: embedding section
- 24: tunnel section
- 25: receptacle
- 26: front opening
- 27: top opening
- 30: contact element
- 31: distal end
- 31A: free end
- 32: stopping section
- 33: contact section
- 34: transition section
- 35: fixing section
- 36: mounting section
- 39: proximal end
- 40: strip
- 41: cut and deformed metal part
- 42: first curve
- 43: bow shaped section
- 44: second curve
- 53: contact point
- 60: strip
- 100: contact carrier
- 200: undeflected state of the contact section
- 201: pre-tensioned state of the contact section
- 202: deflected state of the contact section
- 301: step of a method
- 302: step of a method
- 303: step of a method
- 304: step of a method
- 400: apparatus
- 401: course positioning part
- 402: fine positioning part
- 403: deflection part
- 404: tunnel shaping part
- 410: channel
- 420: force free position of the stopping section
- 421: pre-tensioned position of the stopping section
- 422: deflected position of the stopping section
- 424: upper face
- 433: pushing face
- 434: hollow space

- C: contacting direction
- E: extension direction
- T: transverse direction

## Claims

1. Contact carrier (100), comprising at least one contact element (30) and a moulded carrier body (20) fixing the at least one contact element (30) at a fixing section (35) thereof, wherein the contact element (30) comprises a contact section (33) for contacting a mating contact element along a contacting direction (C), the contact section (33) being elastically deflectable relative to the carrier body (20) against the contacting direction (C), and a stopping section (32) that rests in a pre-tensioned manner against a resting section (22) on the carrier body (20).

2. Contact carrier (100) according to claim 1, wherein the carrier body (20) is a single piece (21).

3. Contact carrier (100) according to claim 1 or 2, wherein the stopping section (32) is deflectable with the contact section (33).

4. Contact carrier (100) according to one of claims 1 to 3, wherein the contact element (30) is moulded into the carrier body (20) at the fixing section (35).

5. Contact carrier (100) according to one of claims 1 to 4, wherein the contact section (33) is located between the stopping section (32) and the fixing section (35).

6. Contact carrier (100) according to one of claims 1 to 5, wherein the stopping section (32) is pre-tensioned along the contacting direction (C).

7. Contact carrier (100) according to one of claims 1 to 6, wherein the stopping section (32) is located at a free end (31A) of the contact element (30).

8. Contact carrier (100) according to one of claims 1 to 7, wherein the stopping section (32) extends perpendicular to the contacting direction (C).

9. Contact carrier (100) according to one of claims 1 to 8, wherein the contact carrier (100) comprises at least two contact elements (30).

10. Method of producing a contact carrier (100) comprising a contact element (30) and a carrier body (20), the method comprising the step of moulding the carrier body (20), wherein a contact section (33) of the contact element (30) is elastically deflected relative to a fixing section (35) of the contact element (30) during the step of moulding the carrier body (20).

11. Method according to claim 10, wherein the contact element (30) is embedded in the carrier body (20) by overmoulding at a fixing section (35) of the contact element (30).

12. Method according to claim 10 or 11, wherein the method comprises only a single moulding step for moulding the entire carrier body (20).

13. Method according to one of claims 10 to 12, wherein a resting face (22) of the carrier body (20) is formed spaced against the contact direction (C) from the force free position (420) of a stopping section (32) of the contact element (30).

14. Method according to one of claims 10 to 13, wherein a part of the carrier body (20) is formed at a location where the stopping section (32) would be located in a force free state (420).

15. Apparatus (400) for producing a contact carrier (100) comprising a contact element (30) and a carrier body (20), the apparatus (400) comprising parts for forming a mould for injection moulding the carrier body (20), wherein the apparatus (400) is adapted to elastically deflect a contact section (33) of the contact element (30) relative to a fixing section (35) of the contact element (30).
